Europäisches Patentamt

(19) European Patent Office

Office européen des brevets

(11) Numéro de publication : **0 296 055 B1**

(12) # FASCICULE DE BREVET EUROPEEN

(45) Date de publication du fascicule du brevet :
14.08.91 Bulletin 91/33

(21) Numéro de dépôt : 88401469.7

(22) Date de dépôt : 14.06.88

(51) Int. Cl.⁵ : **B24D 3/06**

(54) **Procédé de fabrication de produit abrasif thermostable composite.**

(30) Priorité : 16.06.87 FR 8708368

(43) Date de publication de la demande :
21.12.88 Bulletin 88/51

(45) Mention de la délivrance du brevet :
14.08.91 Bulletin 91/33

(84) Etats contractants désignés :
CH DE ES GB IT LI SE

(56) Documents cités :
FR-A- 2 598 644
US-A- 4 403 015
PATENT ABSTRACTS OF JAPAN, vol. 8, no.
240 (M-336)[1677], 6 novembre 1984; & JP-A-59
118 802 (TOSHIBA TUNGALOY K.K.) 09-
07-1984

(73) Titulaire : **SOCIETE INDUSTRIELLE DE
COMBUSTIBLE NUCLEAIRE
4 rue du Radar
F-74008 Annecy (FR)**

(72) Inventeur : **Cerceau, Jean-Michel
22 Rue Aimé Bouchayer
F-38130 Seyssinet (FR)**

(74) Mandataire : **Fort, Jacques
CABINET PLASSERAUD 84, rue d'Amsterdam
F-75009 Paris (FR)**

## Description

L'invention concerne les produits abrasifs composites du type ayant une partie active, constituée par un compact contenant des grains de produit ultra-dur (diamant ou nitrure de bore cubique) représentant plus de 80% en volume du compact, chaque grain étant lié directement à ses voisins pour que le compact ait une structure polycristalline, et par un support dur et réfractaire solidaire du compact, constitué essentiellement d'un carbure réfractaire tel que le carbure de tungstène.

Le terme "compact" désigne un produit fritté constitué par des grains liés entre eux par des ponts, créés par diffusion de matière à l'état plastique. Ce frittage en phase plastique est obtenu à des pressions et des températures de l'ordre de grandeur des pressions et températures utilisées pour la synthèse des grains de diamant, lorsque le compact est à base de diamant, et de celles nécessaires à la transformation du nitrure de bore hexagonal en nitrure de bore cubique, dit CBN, dans le cas où le produit ultra-dur est du CBN.

De nombreuses applications exigent des produits abrasifs thermostables, c'est-à-dire pouvant être portés à des températures élevées lors de leur utilisation sans destruction rapide. De très nombreux travaux ont été effectués depuis une quinzaine d'années pour assurer ce caractère thermostable d'abord aux compacts eux-mêmes, puis à des produits abrasifs composites les incorporant.

Les produits composites du type ci-dessus défini sont connus depuis très longtemps. Le document FR-A-2089415 décrit un produit composite constitué d'un compact de diamant sur un support en carbure de tungstène, le compact et le carbure contenant un même additif jouant le rôle de catalyseur de conversion du carbone en diamant et de liant de frittage, qui peut être le nickel ou le cobalt.

Un tel produit est inutilisable pour des travaux de coupe qui le portent à une température élevée. Le compact de diamant polycristallin contenant du cobalt n'est pas thermostable. L'interface entre compact et support, constitué de carbure de tungstène, de diamant et de liant, ne résiste pas dans ces conditions, même lorsqu'on a inséré lors de la fabrication une barrière métallique entre support et compact.

Pour tenter de rendre le compact thermostable, on a proposé d'éliminer le catalyseur par lixiviation (US-A-3745623). Mais le compact résiduel est poreux et présente une surface spécifique très importante, de sorte que sa durée de vie à haute température est réduite par oxydation, et sa résistance à l'abrasion, même à température ambiante, est réduite du fait de l'absence d'une phase liante intergranulaire.

On a tenté d'écarter ce défaut soit en infiltrant une phase céramique dans les pores d'un compact lixivié, soit en créant une phase céramique à partir de la phase métallique comportant au moins un catalyseur lors de la fabrication. Mais ce perfectionnement, s'il permet de donner un caractère thermostable au compact lui-même, ne résout pas un autre problème qui, apparemment, n'a pas été complètement apprécié jusqu'à la présente invention.

Que le compact soit en CBN rendu thermiquement stable du fait de la nature des liants qu'il contient, ou qu'il soit en diamant polycristallin rendu thermostable par la substitution d'une phase céramique à un catalyseur métallique, on constate que, lorsque le produit monté sur un support est soumis, lors de son utilisation, à haute température, il y a rupture de l'interface du fait de contraintes trop élevées. Or, pour de nombreuses applications, par exemple le forage, le produit abrasif est soumis à de telles contraintes qu'il est souhaitable qu'il puisse les supporter à température élevée.

L'invention vise notamment à fournir un produit abrasif du type ci-dessus défini susceptible de supporter simultanément des contraintes de cisaillement et des températures d'utilisation élevées, pouvant dépasser 1100°C en atmosphère neutre ou réductrice.

Dans ce but, l'invention propose notamment un procédé de fabrication d'un produit abrasif du type ci-dessus défini, suivant lequel : on place une couche de grains de produit ultra-dur mis en présence de composants destinés à donner naissance à une phase céramique liante dans une cellule ; on recouvre la couche de poudre d'une couche mince de tungstène et d'un revêtement de matériau d'apport de carbone et, enfin, d'un support en carbure de tungstène fritté ou non ; et on porte la cellule contenant l'empilement ainsi réalisé à une température et une pression suffisantes pour provoquer le frittage en phase plastique des grains de produit ultra-dur entre eux et assurer la liaison du compact ainsi obtenu avec le support.

L'invention propose aussi un produit abrasif défini selon la revendication 7.

Le tungstène se présente sous forme d'une feuille ayant une épaisseur de 200 à 400 µm, avantageusement environ 250 µm ; le terme "matériau d'apport de carbone" désigne un matériau constitué exclusivement ou quasi-exclusivement de carbone sous une forme quelconque et pouvant céder celui-ci. La couche de carbone aura toujours une épaisseur extrêmement faible, nettement inférieure à celle du tungstène, d'environ 30 à 300 nm. De telles épaisseurs peuvent notamment être obtenues par vaporisation et dépôt sous vide, ou par dépôt en phase vapeur de carbone sur le substrat.

Les essais effectués ont révélé que les produits obtenus par ce procédé présentent une résistance au cisaillement à l'interface, à haute température, beaucoup plus élevée que les produits existant à ce jour. On peut penser, bien que l'exactitude de cette explication ne doive pas être considérée comme une condition de validité du brevet, que l'effet favorable du carbone est dû à ce que, d'une part, le liant contenu dans le support est arrêté par la combinaison du tungstène et du carbone et, d'autre part, la carburation du tungstène est réalisée par apport de carbone du revêtement, sans modification notable de la nature chimique des éléments de la zone du support proche du compact.

Le procédé qui vient d'être défini permet d'arriver à un produit abrasif du type ci-dessus défini, dont la partie active comprend, en plus du produit ultra-dur, une phase liante assurant la thermostabilité de cette partie et dont le support est en carbure de tungstène à liant cobalt ou nickel, produit qu'on peut caractériser comme présentant une interface de liaison dont la composition varie de façon progressive et régulière depuis une zone constituée de carbure de tungstène directement liée au support et ayant comme ce support une composition stoechiométrique correspondant sensiblement à la formule WC, une zone de transition jusqu'à la composition $W_2C$ puis une zone de transition jusqu'à une couche résiduelle de tungstène métallique présentant une liaison métallurgique avec le produit ultra-dur.

Le carbure de tungstène conserve en conséquence, même à l'interface, l'ensemble des ses qualités mécaniques, du fait de l'absence de création de phase fragilisante.

Les résultats favorables de l'invention ne sont obtenus qu'à condition qu'il y ait emploi simultané, lors du processus de fabrication, d'une couche intermédiaire de tungstène et d'un revêtement de produit carburant entraînant, pendant le frittage, la carburation du tungstène et réduisant de même l'appauvrissement en carbone du substrat. En ce sens, le procédé suivant l'invention est extrêmement différent de celui décrit dans le document US-A-4442180. Ce document propose de réaliser des outils comportant une partie active à base de diamant polycristallin ou de CBN séparée d'un substrat de (Mo, W) $C_x$, où x est inférieur à 1, ce qui indique une sous-stoechiométrie en carbone, par une couche intermédiaire de liaison constituée de carbure métallique de moins de 0,1 mm d'épaisseur obtenue par interposition d'une feuille mince de métal lors de la fabrication. La carburation de ce métal s'effectue aux dépens du support. Et, du fait de la très faible épaisseur de métal, il est douteux que la feuille soit capable d'éviter la diffusion du liant de frittage vers la partie active au cours de la fabrication.

Le caractère thermostable de la partie active peut être obtenu par utilisation de diverses phases liantes.

Dans le cas où cette partie active est un compact constitué essentiellement de grains de diamant, le caractère thermostable peut être obtenu en utilisant une phase liante contenant, d'une part, du silicium et, d'autre part, du fer et du nickel, le silicium et le fer-nickel étant alliés. On peut également utiliser une phase liante contenant du titane et du nickel, c'est-à-dire une des compositions décrites dans la demande de brevet EP-A-246118.

On peut également utiliser, bien que cette solution soit moins favorable, une phase liante constituée à partir de bore, de titane, de silicium ou de leurs composés (document FR-A-2043350).

Lorsqu'au contraire le produit ultra-dur contenu dans la partie active est constitué par du CBN, la phase liante pourra notamment être formée de diverses combinaisons déjà connues, notamment à base d'aluminium, de silicium et de carbone, ou d'aluminium, de nickel et de titane ; ou d'aluminium, de fer et de titane. De nombreuses compositions de ce genre ont déjà été décrites, par exemple dans le document EP-A-181258.

L'invention sera mieux comprise à la lecture de la description qui suit de modes particuliers de réalisation, donnés à titre d'exemples non limitatifs. La description se réfère aux dessins qui l'accompagnent, dans lesquels :

— la Figure 1, sur laquelle l'échelle n'est pas respectée, montre schématiquement la façon dont les divers composants destinés à réaliser le produit sont mis en place dans une cellule de fabrication ;

— la Figure 2, similaire à la Figure 1, montre la constitution du produit final.

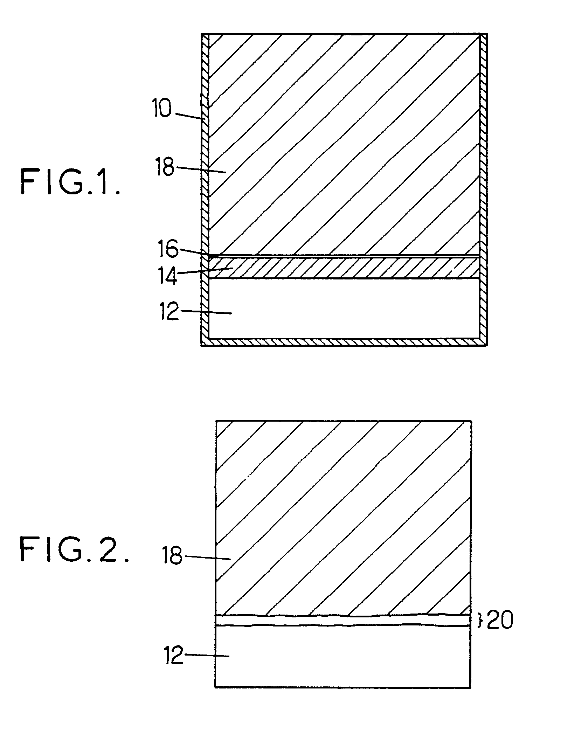

La Figure 1 montre la façon dont seront généralement mis en place les composants du produit abrasif à réaliser en vue de leur fabrication. Dans une coupelle 10 en molybdène, on met d'abord en place un ensemble constitué de grains de produit ultra-dur ayant typiquement une granulométrie inférieure à 150 µm, mélangés aux éléments de constitution de la phase céramique liante, pour constituer une couche 12. Sur cette couche 12 est placé un disque de tungstène 14 préalablement revêtu, sur sa face éloignée de la couche 12, d'un revêtement mince 16 du matériau d'apport de carbone. Dans la pratique, l'épaisseur du disque 14 sera comprise entre 200 et 400 µm. Le revêtement pourra avoir de 300 à 3000 Å d'épaisseur et être obtenu par vaporisation et dépôt sous vide de carbone.

On place ensuite, sur l'empilement ainsi constitué, le support 18 en carbure de tungstène déjà fritté, ou les composants de ce support, comportant le carbure éventuellement sous forme cémentée contenant le liant de frittage nécessaire. Dans le mode de réalisation montré en Figure 1, ce support 18 se présente sous forme d'un pion déjà préfritté.

La cellule 10 est sertie sur le support de carbure de tungstène de façon à maintenir ce dernier en contact avec le disque. L'ensemble compact ainsi obtenu est placé dans une cellule de transmission de pression et de température et ensuite passé en presse.

On trouve dans le produit obtenu (Figure 2) une partie active thermostable provenant de la couche 12 et le support 18 en carbure de tungstène. A l'interface 20, elle-même thermostable, entre ces deux éléments, on trouve une variation progressive de composition, depuis WC à la jonction avec le support 18 jusqu'à un résidu de tungstène pur à la jonction avec la partie active 12, résidu qui constitue une barrière de diffusion et interdit le passage du liant cobalt contenu dans le carbure.

On donnera maintenant quelques exemples de réalisation, à titre purement illustratif.

Exemple 1 :

Un ensemble de grains de diamant dont la répartition granulométrique se situe entre 10 et 60 μm est mélangé intimement à un mélange de nickel et de fer à 50% en poids de fer, la quantité de Fe-Ni représentant 3,2% en poids du total. Au fond d'une coupelle 10 en molybdène, on place un disque de silicium de 0,25 mm d'épaisseur, représentant 20% en poids de la masse de diamant contenant du Fe-Ni dont il est ensuite recouvert.

On place ensuite, sur la couche de diamant, un disque de tungstène de 250 μm d'épaisseur préalablement revêtu d'une couche de 100 nanomètres environ de carbone pur et s'ajustant parfaitement au diamètre intérieur de la coupelle 10 de molybdène. Le support de carbure de tungstène est placé. La coupelle est sertie sur le support de carbure. La cellule est placée dans une presse où elle est soumise à des pressions voisines de 60000 bars et des températures de l'ordre de 1500°C pendant 3 mn environ. Le produit obtenu est mis en forme par rodage et rectification qui élimine le silicium non infiltré.

Des essais comparatifs ont ensuite été effectués sur le produit obtenu dans des conditions représentatives de l'utilisation sur des outils de forage. Ces essais visaient à déterminer la contrainte de cisaillement provoquant la rupture à l'interface, à différentes températures de fonctionnement.

Les contraintes de cisaillement, provoquant la rupture, sont les suivantes (en bars) :
  (1) Produit abrasif constitué d'un support de tungstène et d'une partie active thermostable non poreuse, fabriqué sans interposition d'une couche de carbone :
  à 600°C : 3218 bars (47300 psi)
  à 770°C : 2435 bars (35800 psi)
  à 900°C : 2306 bars (33900 psi).
  (2) Produit suivant l'invention : ce produit, porté à une température de 1100°C sous atmosphère neutre, résiste à des contraintes de cisaillement dépassant $3061 \times 10^5$ Pascal, soit 45000 psi.

Exemple 2 :

Un ensemble de grains de CBN dont la répartition granulométrique se situe entre 1 et 8 μm est mélangé intimement à un mélange de silicium, d'aluminium et d'une poudre fine de diamant à raison de 70% d'aluminium, 30% de silicium et d'une teneur en carbone telle que le nombre d'atomes de carbone soit équivalent au nombre d'atomes de silicium, la quantité de liant représentant 15% en poids du total. On place ce mélange au fond d'une coupelle 10 en molybdène. On place ensuite, sur la couche à base de CBN, un disque de tungstène de 250 μm d'épaisseur préalablement revêtu d'une couche de 100 nanomètres environ de carbone pur et s'ajustant parfaitement au diamètre intérieur de la coupelle 10 de molybdène. Le support de carbure de tungstène est placé et la coupelle est sertie sur le support de carbure. La cellule est placée dans une pressure où elle est soumise à des pressions voisines de 60000 bars et des températures de l'ordre de 1500°C pendant 3 mn environ. Le produit obtenu est mis en forme par rodage et rectification.

Des essais d'usinage sur l'acier trempé connu sous la dénomination "90 MV6" ont alors été effectués ; on a constaté que, pour des conditions d'usinage identiques, à savoir, sous lubrifiant, à une vitesse de 80 m/mn pour une profondeur de passe de 0,5 mm et une avance de 0,1 mm/tour, l'usure en dépouille, au bout de 16 mn d'usinage, était de 0,28 mm pour le produit selon l'invention alors qu'un produit du commerce présentait une usure de 0,31 mm.

Un essai complémentaire a été effectué dans les mêmes conditions sans toutefois utiliser de lubrifiant. Le produit selon l'invention présentait, au bout de 16 mn, une usure en dépouille de 0,29 mm, c'est-à-dire quasiment identique à celle de l'essai précédent, alors que l'arête de coupe du produit du commerce s'est totalement détruite dès les premières minutes de l'essai.

Ces essais démontrent ainsi la thermostabilité du produit de la présente invention.

**Revendications**

1. Procédé de fabrication d'un produit abrasif composite ayant une partie active, constituée par un compact contenant des grains de produit ultra-dur représentant plus de 80% en volume du compact, chaque grain étant lié directement à ses voisins pour que le compact ait une structure polycristalline, et par un support dur et réfractaire solidaire du compact, constitué essentiellement d'un carbure réfractaire, **caractérisé en ce que** : on place une couche de grains de produit ultra-dur (12) mis en présence de composants destinés à donner naissance à une phase céramique liante ultra-dure dans une cellule ; on recouvre la poudre d'une couche mince de tungstène (14) revêtue de matériau d'apport de carbone (16) et, enfin, d'un support (18) en carbure de tungstène fritté ou non ; on porte la cellule contenant l'empilement ainsi réalisé à une température et une pression suffisantes pour provoquer le frittage en phase plastique des grains de produit ultra-dur entre eux et assurer la liaison du compact ainsi obtenu sur le support.

2. Procédé selon la revendication 1, caractérisé en ce que la couche mince est constituée par un disque de tungstène de 200 à 400 μm d'épaisseur.

3. Procédé selon la revendication 2, caractérisé en ce que le matériau d'apport est constitué par un revêtement de carbone pur de 30 à 300 nm d'épaisseur.

4. Procédé selon la revendication 3, caractérisé en ce que le revêtement est déposé sur le disque de tungstène par vaporisation sous vide ou dépôt en phase vapeur.

5. Procédé selon l'une quelconque des revendications 1 à 4, caractérisé en ce que, le produit ultra-dur étant du diamant, les composants destinés à donner naissance à une phase céramique ultra-dure sont essentiellement constitués par un mélange de nickel et de fer mélangé auxdits grain et par un disque de silicium portant la couche de grains.

6. Procédé selon l'une quelconque des revendications 1 à 4, caractérisé en ce que, le matériau, ultra-dur étant du nitrure de bore cubique, les composants destinés à donner naissance à une phase céramique sont constitués par un mélange de poudre de silicium, d'aluminium et de diamant.

7. Produit abrasif ayant une partie active constituée par une partie active abrasive qui comprend en plus d'un produit ultra-dur, une phase liante assurant la thermostabilité de cette partie et un support en carbure de tungstène à liant cobalt, caractérisé en ce qu'il présente un interface de liaison dont la composition varie de façon progressive et régulière depuis une zone constituée de carbure de tungstène directement liée au support et ayant comme ce support une composition stoechiométrique correspondant sensiblement à la formule WC, une zone de transition jusqu'à la composition $W_2C$ puis une zone de transition jusqu'à une couche résiduelle de tungstène métallique présentant une liaison métallurgique avec le produit ultra-dur.

8. Produit abrasif selon la revendication 7, caractérisé en ce que l'interface de liaison est thermostable.

## Patentansprüche

1. Verfahren zur Herstellung eines Schleifverbundstoffmaterials mit einem aktiven Bereich, der von einem Kompakt, welches mehr als 80 Volumen % des Kompakts einnehmende Körner eines ultraharten Materials enthält, wobei jedes Korn zur Bildung einer polykristallinen Struktur des Kompakts direkt mit seinen benachbarten Körnern verbunden ist, und von einer harten und schwer schmelzbaren, mit dem Kompakt verbundenen Stütze gebildet ist, wobei die Stütze im wesentlichen aus einer schwer schmelzbaren Kohlenstoffverbindung besteht, dadurch gekennzeichnet,

— daß eine Körnerschicht eines ultraharten Materials (12) in Gegenwart von Bestandteilen zur Bildung einer bindenden, ultraharten keramischen Phase in einer Zelle angeordnet wird,

— daß das Pulver mit einer dünnen Schicht aus Wolfram (14), welche mit einem Einlagematerial aus Kohlenstoff (16) beschichtet ist, und achließlich mit einer Stütze (18) aus gesintertem oder nicht gesintertem Wolframkarbid beschichtet wird,

— daß die Zelle mit der so verwirklichten Schichtung auf eine Temperatur und einen Druck gebracht wird, die zur Hervorrufung der Versinterung der Körner des ultraharten Materials unter sich in plastischer Phase und zur Sicherung der Verbindung mit dem so erhaltenen Kompakt auf der Stütze ausreichen.

2. Verfahren nach Anspruch 1, dadurch gekennzeichnet, daß die dünne Schicht von einer Wolfram-Scheibe von 200-400 μm Dicke gebildet ist.

3. Verfahren nach Anspruch 2, dadurch gekennzeichnet, daß das Einlagematerial von einer reinen Kohlenstoffachicht mit einer Dicke von 30-300 nm gebildet ist.

4. Verfahren nach Anspruch 3, dadurch gekennzeichnet, daß die Schicht auf der Wolfram-Scheibe durch Vakuumverdampfung oder Niederschlag in der Dampfphase aufgebracht wird.

5. Verfahren nach einem der Ansprüche 1 bis 4, dadurch gekennzeichnet, daß das ultraharte Material aus Diamant besteht, wobei die Bestandteile zur Bildung einer ultraharten keramischen Phase im wesentlichen von einer Mischung aus Nickel und mit dem besagten Korn vermischten Eisen und von einer die Kornschicht tragenden Siliciumscheihe gebildet sind.

6. Verfahren nach einem der Ansprüche 1 bis 4, dadurch gekennzeichnet, daß das ultraharte Material aus kubischem Bornitrit besteht, wobei die Beatandteile zur Bildung einer keramischen Phase aus einer Mischung von Siliciumpulver, Aluminiumpulver und Diamantpulver bestehen.

7. Schleifmaterial mit einem aktiven Bereich, welcher durch einen aktiven abschleifenden Bereich, der außerdem ein ultrahartes Material enthält, eine verbindende Phase zur Sicherung der Thermoatabilität dieses Bereiches und eine Stütze aus Wolframkarbid verbunden mit Kobalt gebildet ist, dadurch gekennzeichnet, daß diese eine Verbindungszwischenschicht, deren Zusammensetzung progressiv und regelmäßig von einer aus Wolframkarbid gebildeten und direkt mit der Stütze verbundenen Zone variiert und wie die Stütze eine stöchiometrische Zusammensetzung in genauer Übereinstimmung mit der Formel WC aufweist, eine Übergangszone bis zur Zusammensetzung $W_2C$ und dann eine Übergangszone bis zur restlichen metallischen Wolfram-Schicht aufweist, welche eine metallurgische Verbindung mit dem ultraharten Material aufweist.

8. Schleifmaterial nach Anspruch 7, dadurch gekennzeichnet, daß die Verbindungszwischenschicht thermostabil ist.

## Claims

1. Process for manufacturing a composite abrasive body having an active part, consisting of a compact containing grains of ultra-hard product representing more than 80% per volume of the compact, each grain being directly bonded to the neighbouring grains for the compact to have a polycrystalline structure, and of a hard refractory support bonded to the compact, essentially consisting of a refractory carbide, characterized by the steps of : placing, within a cell, a layer of grains of ultra-hard product (12) in contact with components for generating a ultra-hard ceramic binder phase ; covering the powder with a thin layer of tungsten (14) coated with carbon supplying material (16) and, last, with a tungsten carbide support (18), which is sintered or not sintered ; bringing the cell containing the stack so formed to a temperature and a pressure sufficient for causing mutual plastic phase sintering of the ultra-hard product grains and for bonding the compact so formed onto the support.

2. Process according to claim 1, characterized in that the thin layer is constituted by a tungsten disk 200 to 400 µm thick.

3. Process according to claim 2, characterized in that the carbon supplying material is a coating of pure carbon 30 to 300 µm thick.

4. Process according to claim 3, characterized in that the coating is deposited on the tungsten disk by vacuum vaporization or vapor phase deposition.

5. Process according to any one of claims 1-4, characterized in that, the ultra-hard product being diamond, the components for generating a ultra-hard ceramic phase are essentially constituted by a mixture of nickel and iron mixed with said grains and by a silicon disk carrying the grain layer.

6. Process according to any one of claims 1-4, characterized in that, the ultra-hard material being cubic boron nitride, the components for generating a ceramic phase are constituted by a mixture of silicon, aluminium and diamond powders.

7. Abrasive product having an active part constituted by an abrasive active body which comprises, in addition to a ultra-hard product, a binder phase for thermostability of the body and a support of cobalt-binded tungsten carbide, characterized in that it has a bonding interface whose composition varies progressively and evenly from a zone consisting of tungsten carbide directly bonded to the support and having, as the support, a stoechiometric composition substantially corresponding to formula WC, a transition zone up to a composition $W_2C$, then a transition zone up to a residual layer of tungsten metal having a metallurgical bonding with the ultra-hard product.

8. Abrasive product according to claim 7, wherein the bonding interface is thermostable.

FIG.1.

FIG.2.